# EUROPÄISCHE PATENTSCHRIFT

(11) **EP 1 856 433 B1**
(45) Veröffentlichungstag und Bekanntmachung des Hinweises auf die Patenterteilung: **21.11.2012**
(21) Anmeldenummer: 06708578.7
(22) Anmeldetag: 01.03.2006
(51) Int. Cl.: F16L 9/147, B32B 15/08

(54) **KUNSTSTOFF-METALL-VERBUNDROHR FÜR SANITÄR- UND/ODER HEIZUNGSANLAGEN**
COMPOSITE PLASTIC-METAL PIPE FOR PLUMBING AND/OR HEATING SYSTEMS
TUYAU COMPOSITE CONSTITUE DE PLASTIQUE ET DE METAL, CONÇU POUR DES INSTALLATIONS SANITAIRES ET/OU DES INSTALLATIONS DE CHAUFFAGE

(30) Priorität: 03.03.2005 EP 05101630
(43) Veröffentlichungstag der Anmeldung: 21.11.2007
(73) Patentinhaber: Uponor Innovation AB, 513 81 Fristad (SE)
(72) Erfinder: RIESSELMANN, Franz-Josef, 49393 Lohne (DE); DRECKÖTTER, Stefan, 49078 Osnabrück (DE); JÄRVENKYLÄ, Jyri, 15870 Hollola (FI)
(74) Vertreter: Epping - Hermann - Fischer
(86) Internationale Anmeldenummer: PCT/EP2006/060357
(87) Internationale Veröffentlichungsnummer: WO 2006/092407

(56) Entgegenhaltungen:
- EP-A- 1 415 802
- WO-A-99/31424
- DE-A1- 4 410 148
- DE-A1- 10 018 324
- DE-C2- 19 581 642
- DE-U- 20 005 621
- DE-U1- 20 014 466

## Beschreibung

Die Erfindung betrifft ein Kunststoff-Metall-Verbundrohr für Sanitär- und/oder Heizungsanlagen mit einem Innenrohr aus einem polymeren Kunststoffmaterial mit einer Dichte und einem Schmelzindex, einer Haftvermittlerschicht auf dem Innenrohr und einer Metallschicht auf der Haftvermittlerschicht.

Derartige Kunststoffrohre sind vielfach bekannt und z.B. in DE 200 05 621 U1 und DE 200 14 466 U1 beschrieben. Diese bekannten Rohre weisen eine Wandung aus einem Kunststoff-Metall-Verbundwerkstoff auf, wobei das Innenrohr ein polymeres Kunststoffmaterial auf MDPE-Basis aufweist und um das Innenrohr herum eine Metallschicht (z.B. Aluminiumschicht) angeordnet ist, die mittels eines Klebers bzw. Haftvermittlers auf LDPE-Basis mit dem Innenrohr verbunden ist. Bei dem Haftvermittler handelt es sich um ein Standard-Produkt mit einer Dichte von z.B. 0,915 g/cm³, dem ein Maleinsäurehydrid hinzugefügt ist, um eine Haftung zur Metallschicht zu erzielen. Außen auf der Metallschicht kann eine weitere Haftvermittlerschicht angeordnet sein, über die ein Kunststoff-Außenrohr mit der Metallschicht verbunden ist.

Kunststoff-Metall-Verbundrohre weisen gegenüber reinen Metall- oder Kunststoffrohren einige Vorteile wie z.B. keine Korrosion und keine Ablagerungen (gilt gegenüber Metallrohren) und ein erhöhtes Druckaufnahmevermögen (gilt gegenüber Kunststoffrohren) auf, da die Metallschicht, die im Regelfall Aluminium oder Kupfer aufweist, den größten Teil der mechanischen Belastungen trägt. Um die Menge an Metall reduzieren zu können, ist man bestrebt, die Metallschicht relativ dünn zu wählen. Bei derartigen Kunststoff-Metall-Verbundrohren hat sich jedoch herausgestellt, dass diese bei extremen Belastungen Schaden erleiden.

Aus DE 20014466 U1 ist ein Kunststoff-Metall-Verbundrohr bekannt, dessen Innen- bzw. Basisrohr aus einem vernetzten MD-PE besteht. Außen auf das Innenrohr ist eine Haftvermittlerschicht aufgebracht, die aus PE besteht. Um diese Haftvermittlerschicht herum befindet sich ein Metallband. Durch die Haftvermittlerschicht haftet das Metallband auf dem Innenrohr.

Aus der EP 1415802 A1 ist ein flexibler Schlauch bekannt, der aus mindestens einer Schicht besteht. Die Schicht ist durch Extrudieren einer oder mehrerer Verbindungen auf Polyethylenbasis mit einer niedrigen Dichte im Bereich von 0,800 bis 0,920 g/cm3 and einem Schmelzindex von 0,3-4 g/10 min gebildet.

Die Druckschrift WO 99/31424 zeigt ein Verbundrohr aus Metall-Kunststoff, bestehend aus einem inneren Metallrohr, einem Außenrohr aus einem Kunststoff und einer Zwischenschicht mit einer biadhesive Funktion, ebenfalls aus einem Kunststoff. Die Kunststoff der Schichten enthält ein AntiOxidationsmittel als Additiv für das Metallrohr.

Aus DE 19581642 C2 ist ein Kalt- und Heisswasserzuführungsrohr aus einer Kupferlegierung mit einem Schutzfilm auf der inneren Oberflaeche bekannt. Aus DE 20005621 U1 ist ferner ein Metall-Kunststoff-Verbundrohr mit einem Kunststoff-Innenrohr und einer Metallummantelung um das Kunststoff-Innenrohr bekannt. Die Kleberverbindung von Längsrändern des Metallbandes ist in Abhängigkeit von der Temperatur nicht lösbar.

Aufgabe der Erfindung ist es, ein Kunststoff-Metall-Verbundrohr zu schaffen, dessen insbesondere mechanischen Eigenschaften verbessert sind.

Zur Lösung dieser Aufgabe wird mit der Erfindung ein Kunststoff-Metall-Verbundrohr für Sanitär- und/oder Heizungsanlagen vorgeschlagen, das versehen ist mit einem Innenrohr aus einem polymeren Kunststoffmaterial (z.B. MDPE) mit einer Dichte zwischen 0,942 und 0,947 g/cm3 und einem Schmelzindex, einer Haftvermittlerschicht auf dem Innenrohr und einer Metallschicht auf der Haftvermittlerschicht, wobei die Haftvermittlerschicht aus einem polymeren Kunststoffmaterial besteht, das im Wesentlichen die gleiche Dichte, im Wesentlichen die gleichen mechanischen Eigenschaften wie z.B. Dehnung, Festigkeit und Schlagzähigkeit und/oder im Wesentlichen den gleichen Schmelzindex wie das Kunststoffmaterial des Innenrohres aufweist.

Erfindungsgemäß weist die Haftvermittlerschicht ein Kunststoffmaterial auf PE-Basis mit einer Dichte im Bereich derjenigen des Kunststoffmaterials des Innenrohres, d.h. mit einer Dichte zwischen 0,930 bis 0,938 g/cm3 auf, wobei dem Kunststoffmaterial der Haftvermittlerschicht eine Haftvermittlungskomponente zugegeben ist.

Der Schmelzindex (englisch: melt flow index oder melt flow rate) des Kunststoffmaterials des Innenrohrs liegt zwischen 0,4 und 5,0 g/10 min (gemessen bei 190 °C und einem sich durch ein Gewicht von 5 kg ergebenden auf die Schmelze wirkenden Druck) und liegt bevorzugt zwischen 0,4 und 3 g/10 min, während der Schmelzindex des Haftvermittlers zwischen 1,6 und 8,0 g/10 min (ebenfalls gemessen bei 190 °C und einem sich durch ein Gewicht von 5 kg ergebenden auf die Schmelze wirkenden Druck) und vorzugsweise zwischen 3,0 und 6,0 g/10 min liegt.

Vorteilhaft weist das Kunststoffmaterial des Innenrohres und das der Haftvermittlerschicht im Wesentlichen in gleicher Weise wirkende Stabilisatoren auf.

Vorteilhafterweise werden als Stabilisatoren für das Kunststoffmaterial des Innenrohres und/oder für das Kunststoffmaterial der Haftvermittlerschicht phenolische Substanzen, Thio-Antioxydantien und Hindered-Amine-Light-Stabilisatoren ("HALS"-Materialien) verwendet.

Vorzugsweise weist das Kunststoffmaterial des Innenrohres und das der Haftvermittlerschicht im Wesentlichen die gleichen Molekülstrukturen auf.

Zweckmäßigerweise kann die Dichte des Kunststoffmaterials der Haftvermittlerschicht um ± 1 %, vorzugsweise 0,8 % und insbesondere 0,6 % von der mittleren Dichte des Kunststoffmaterials des Innenrohres abweichen.

Vorzugsweise weicht der Schmelzindex des Kunststoffmaterials der Haftvermittlerschicht um ± 50 %, vorzugsweise ± 40 % und insbesondere ± 35 % von dem Schmelzindex des Kunststoffmaterials des Innenrohres ab.

Das Kunststoffmaterial der Haftvermittlerschicht weist 0,01 bis 1,0 Gew-% an Metalldesaktivatoren auf.

Gemäß einer vorteilhaften Weiterbildung der Erfindung wird ein Metall-desaktivator auf z.B. Phenolbasis (Handelsname: Irganox MD 1024) in der Dosierung von 0,02 bis 0,3 % verwendet.

Zweckmäßig weist das Kunststoffmaterial des Innenrohres ein Basispolymer auf, bei dem es sich um ein unvernetztes Polyethylen mit einer Dichte von 0,937 bis 0,948 g/cm³ (vorzugsweise 0,942 bis 0,947 g/cm³⁾ handelt. Erfindungsgemäß kann der Rohraufbau so gestaltet werden, dass sowohl das Innenrohrmaterial, Außenrohrmaterial als auch der Haftvermittler vernetzt ist oder eines oder zwei dieser Materialien vernetzt ist oder das Innenrohr und/oder das Außenrohr und/oder der Haftvermittler unvernetzt bleibt. Der Vernetzungsgrad liegt dabei zwischen 30 bis 70 %.

Erfindungsgemäß übernimmt die Haftvermittlerschicht zwischen dem Innenrohr und der Metallschicht teilweise auch Aufgaben des Innenrohres. Dies wird erreicht, indem die Haftvermittlerschicht aus einem polymeren Kunststoffmaterial besteht, das im Wesentlichen die gleiche Dichte, im Wesentlichen die gleichen mechanischen Eigenschaften wie z.B. Dehnung, Festigkeit und Schlagzähigkeit und im Wesentlichen den gleichen Schmelzindex wie das Kunststoffmaterial des Innenrohres aufweist. Die Haftvermittlerschicht ist z.B. vernetzt, wobei der Vernetzungsgrad zwischen 30% und 70% liegen kann.

Erfindungsgemäß wurde also das Basispolymer für die innere Haftvermittlerschicht derart geändert, dass es dem des Innenrohres entspricht, und zwar im Molekularaufbau, Dichte und MFR (Fließverhalten).

Es ist bekannt, Kunststoffrohre mit Stabilisatoren zu versehen, um das Material
a) bei der Rohrextrusion zu schützen und
b) das Rohr im späteren Einsatz, z.B. für Warmwasser über einen langen Zeitraum von vielen Jahren zu schützen.

Die Aufgabe von Stabilisatoren ist es, das Polymer zu schützen, wobei sich aber der Stabilisator verbraucht, was abhängig ist von vielen Einflussgrößen wie z.B. Wassertemperatur, Wasserqualität, Fließgeschwindigkeit, etc.

Um das Polymer des Innenrohres inklusive des inneren Haftvermittlers besser zu schützen, werden der Haftvermittlerschicht erfindungsgemäß weitere Funktionen "zugeteilt".

Neben der reinen Haftungsvermittlung zwischen der Metallschicht und dem Innenrohrmaterial soll der Haftvermittler auch noch "Aufgaben" des Innenrohres übernehmen:
a) Aufnahme von mechanischen Spannungen durch den Innendruck (dadurch mögliche Reduzierung der Metallschichtdicke).
b) Pufferreservoir für Stabilisator und Verminderung der Migrationsgeschwindigkeit.
c) Verminderung des Kriechens bei höheren Temperaturen im Verbinderbereich.
d) Die Schwächung des Rohres durch partielle, unkontrollierbare Haftvermittleranhäufungen zu kompensieren.

Die Stabilisierung des Basispolymers der Haftvermittlerschicht ist erfindungsgemäß derart geändert, dass das Migrationsverhalten verbessert werden könnte. Erfindungsgemäß kommen z.B. Stabilisatoren auf Basis von Phenolen, Thio Antioxydantien, HALS (Hindered Amine Light Stabilizer) oder Kombinationen zum Einsatz. Diese Stabilisatoren zeigen einen asymmetrischen hochmolekularen Aufbau, so dass sie sich in der amorphen Polymer-Phase verankern und ein vorzeitiges Auswandern des Stabilisators verhindert wird.

Durch den Einbau spezieller Metalldesaktivatoren, z.B. auf Phenolbasis (Handelsname: Irganox MD 1024) in der Dosierung von 0,05 bis 0,3 % konnte der katalytische Abbau des Polymers durch den Kontakt mit dem Aluminium oder Kupfer stark reduziert werden.

Bei einer vorteilhaften Ausgestaltung der Erfindung ist vorgesehen, der Haftvermittlerschicht Material zuzugeben, das die messtechnische Ermittlung der Schichtdicke vereinfacht. So ist es beispielsweise möglich, den Haftvermittler einzufärben, um die Schichtdicke unter einem Mikroskop einfacher ausmessen zu können. Alternativ oder zusätzlich kann der Haftvermittler mit Füllstoffen versehen sein, um die Schichtdicke mittels Röntgenstrahlen messen zu können.

Schließlich kann der Haftvermittler mit einem "Traccr-Material" als Codierung versehen sein, um das Material später wieder "entschlüsseln" zu können (z.B. Entschlüsselung mittels UV-Licht, Röntgenstrahlen, etc.).

Die zuvor gemachten Ausführungen bezüglich der Zugabe von Stoffen zum Haftvermittler gelten generell bei mehrschichtigen Kunststoffrohren bzw. Kunststoff-Metall-Verbundrohren für Sanitär- und/oder Heizungsanlagen, und zwar unabhängig davon, ob diese Rohre die Merkmale eines oder mehrerer der nachfolgenden Ansprüche aufweist. Ein Sanitär- und/oder Heizungsrohr, das einen Haftvermittler mit den zuletzt genannten Eigenschaften aufweist, umfasst also mindestens zwei Materiallagen aus Kunststoffmaterial und/oder Metall, die mittels der Haftvermittlerschicht miteinander verbunden sind.

## Patentansprüche

1. Kunststoff-Metall-Verbundrohr für Sanitär- und/oder Heizungsanlagen, mit einem Innenrohr aus einem polymeren Kunststoffmaterial mit einer Dichte im Bereich zwischen 0,937 bis 0,948 g/cm3 und einem Schmelzindex, einer Haftvermittlerschicht auf dem Innenrohr und einer Metallschicht auf der Haftvermittlerschicht,
**dadurch gekennzeichnet, dass**
- das Kunststoffmaterial des Innenrohres ein Basispolymer aus unvernetztem Polyethylen aufweist,
- die Haftvermittlerschicht ein polymeres Kunststoffmaterial aufweist, das im Wesentlichen die gleiche Dichte und im Wesentlichen die gleichen mechanischen Eigenschaften wie das Kunststoffmaterial des Innenrohres aufweist,und
- das Kunststoffmaterial des Innenrohres und das der Haftvermittlerschicht im Wesentlichen in gleicher Weise wirkende Stabilisatoren aufweisen.

2. Kunststoff-Metall-Verbundrohr nach Anspruch 1, **dadurch gekennzeichnet, dass** die Haftvermittlerschicht ein Kunststoffmaterial mit einer Dichte von 0,930 bis 0,938 g/cm3 aufweist und dass dem Kunststoffmaterial der Haftvermittlerschicht eine Haftvermittlungskomponente zugegeben ist.

3. Kunststoffrohr-Metall-Verbundrohr nach Anspruch 1 oder 2, **dadurch gekennzeichnet, dass** als Stabilisatoren für das Kunststoffmaterial des Innenrohres phenolische Substanzen, Thio-Antioxydantien und Hindered-Amine-Light-Stabilisatoren ("HALS"-Materialien) oder Kombinationen daraus verwendet werden.

4. Kunststoff-Metall-Verbundrohr nach Anspruch 3, **dadurch gekennzeichnet, dass** die Stabilisatoren für das Kunststoffmaterial des Innenrohres und der Haftvermittlerschicht einen asymmetrischen molekularen Aufbau aufweisen und in der amorphen Polymer-Phase des Kunststoffmaterials der Haftvermittlerschicht verankern.

5. Kunststoff-Metall-Verbundrohr nach einem der Ansprüche 1 bis 4, **dadurch gekennzeichnet, dass** das Kunststoffmaterial des Innenrohres und das der Haftvermittlerschicht im Wesentlichen die gleichen Molekülstrukturen aufweisen.

6. Kunststoff-Metall-Verbundrohr nach einem der Ansprüche 1 bis 5, **dadurch gekennzeichnet, dass** die Dichte des Kunststoffmaterials der Haftvermittlerschicht um ± 1 %, vorzugsweise 0,8 % und insbesondere 0,6 % von der mittleren Dichte des Kunststoffmaterials des Innenrohres abweicht.

7. Kunststoff-Metall-Verbundrohr nach einem der Ansprüche 1 bis 6, **dadurch gekennzeichnet, dass** das Kunststoffmaterials der Haftvermittlerschicht einen Schmelzindex aufweist, der um ± 50 %, vorzugsweise ± 40 % und insbesondere ± 35 % von dem Schmelzindex des Kunststoffmaterials des Innenrohres abweicht.

8. Kunststoff-Metall-Verbundrohr nach einem der Ansprüche 1 bis 7, **dadurch gekennzeichnet, dass** das Kunststoffmaterial der Haftvermittlerschicht 0,01 bis 1,0 Gew-% an Metalldesaktivatoren aufweist.

9. Kunststoff-Metall-Verbundrohr nach Anspruch 8, **dadurch gekennzeichnet, dass** ein Metalldesaktivator auf Phenolbasis (Handelsname: Irganox MD 1024) in der Dosierung von 0,02 bis 0,3 % verwendet wird.

10. Kunststoff-Metall-Verbundrohr nach einem der Ansprüche 1 bis 9, **dadurch gekennzeichnet, dass** das Kunststoffmaterial des Innenrohres ein Basispolymer aufweist, bei dem es sich um ein unvernetztes Polyethylen mit einer Dichte von 0,942 bis 0,947 g/cm3 handelt.

11. Kunststoff-Metall-Verbundrohr nach einem der Ansprüche 1 bis 10, **dadurch gekennzeichnet, dass** die Haftvermittlerschicht in vernetzter Form vorliegt, wobei der Vernetzungsgrad zwischen 30 % und 70 % beträgt.

12. Kunststoff-Metall-Verbundrohr nach einem der Ansprüche 1 bis 11, **dadurch gekennzeichnet, dass** die Haftvermittlerschicht zur messtechnischen Ermittlung der Schichtdicke mit Hilfe eines Mikroskops eingefärbt ist.

13. Kunststoff-Metall-Verbundrohr nach einem der Ansprüche 1 bis 11, **dadurch gekennzeichnet, dass** die Haftvermittlerschicht zur messtechnischen Ermittlung der Schichtdicke mittels Röntgenstrahlen mit Füllstoffen versehen ist.

14. Kunststoff-Metall-Verbundrohr nach einem der Ansprüche 1 bis 13, **dadurch gekennzeichnet, dass** die Haftvermittlerschicht zur Codierung ihrer Materialzusammensetzung bzw. ihres Materials mittels UV-Licht oder Röntgenstrahlen detektierbares Tracer-Material aufweist.

## Claims

1. A plastic/metal composite tube for sanitary facilities and/or heating installations, comprising an inner tube made of a polymeric synthetic material having a density in the range between 0.937 and 0.948 g/cm³ and a melt index, an adhesion promoting layer on the inner tube and a metal layer on the adhesion promoting layer,
**characterized in that**
- the synthetic material of the inner tube comprises a base polymer made of uncured polyethylene,
- the adhesion promoting layer comprises a polymeric synthetic material with essentially the same density and essentially the same mechanical properties as the synthetic material of the inner tube, and
- the synthetic material of the inner tube and that of the adhesion promoting layer comprise stabilizers acting essentially in the same way.

2. The plastic/metal composite tube according to claim 1, **characterized in that** the adhesion promoting layer comprises a synthetic material having a density from 0.930 to 0.938 g/cm³ and an adhesion promoting component is added to the synthetic material of the adhesion promoting layer.

3. The plastic/metal composite tube according to claim 1 or 2, **characterized in that** phenolic substances, thio-antioxidants and Hindered-Amine-Light-Stabilizers (HALS materials) or combinations thereof are used as stabilizers for the synthetic material of the inner tube.

4. The plastic/metal composite tube according to claim 3, **characterized in that** the stabilizers for the synthetic material of the inner tube and of the adhesion promoting layer have an asymmetric molecular structure and are anchored in the amorphous polymer phase of the synthetic material of the adhesion promoting layer.

5. The plastic/metal composite tube according to any of the claims 1 to 4, **characterized in that** the synthetic material of the inner tube and that of the adhesion promoting layer have essentially the same molecular structures.

6. The plastic/metal composite tube according to any of the claims 1 to 5, **characterized in that** the density of the synthetic material of the adhesion promoting layer deviates from the average density of the synthetic material of the inner tube by ±1%, preferably 0.8% and in particular 0.6%.

7. The plastic/metal composite tube according to any of the claims 1 to 6, **characterized in that** the synthetic material of the adhesion promoting layer has a melt index deviating from the melt index of the synthetic material of the inner tube by ±50%, preferably ±40% and in particular ±35%.

8. The plastic/metal composite tube according to any of the claims 1 to 7, **characterized in that** the synthetic material of the adhesion promoting layer comprises 0.01 to 1.0 weight-% of metal deactivators.

9. The plastic/metal composite tube according to claim 8, **characterized in that** a phenol-based metal deactivator (trade name: Irganox MD 1024) is used in a dosage of 0.02 to 0.3%.

10. The plastic/metal composite tube according to any of the claims 1 to 9, **characterized in that** the synthetic material of the inner tube comprises a base polymer which is uncured polyethylene having a density from 0.942 to 0.947 g/cm³.

11. The plastic/metal composite tube according to any of the claims 1 to 10, **characterized in that** the adhesion promoting layer is present in cured form, the degree of curing ranging between 30% and 70%.

12. The plastic/metal composite tube according to any of the claims 1 to 11, **characterized in that** the adhesion promoting layer is colored for the metrological determination of the layer thickness by means of a microscope.

13. The plastic/metal composite tube according to any of the claims 1 to 11, **characterized in that** the adhesion promoting layer is provided with filling agents for the metrological determination of the layer thickness by means of X-rays.

14. The plastic/metal composite tube according to any of the claims 1 to 13, **characterized in that** the adhesion promoting layer, for coding its material composition or its material, comprises a tracer material which can be detected by means of UV light or X-rays.

## Revendications

1. Tuyau composite plastique/métal pour installations sanitaires et/ou de chauffage, comprenant un tuyau intérieur en matière plastique en polymère ayant une densité comprise entre 0,937 et 0,948 g/cm³ et un indice de fusion, une couche promotrice d'adhérence sur le tuyau intérieur et une couche métallique sur la couche promotrice d'adhérence,
**caractérisé en ce que**
- la matière plastique du tuyau intérieur présente un polymère de base en polyéthylène non réticulé,
- la couche promotrice d'adhérence présente une matière plastique en polymère qui présente sensiblement la même densité et sensiblement les mêmes propriétés mécaniques que la matière plastique du tuyau intérieur, et
- la matière plastique du tuyau intérieur et celle de la couche promotrice d'adhérence présentent des stabilisants agissant de manière sensiblement similaire.

2. Tuyau composite plastique/métal selon la revendication 1, **caractérisé en ce que** la couche promotrice d'adhérence présente une matière plastique d'une densité de 0,930 à 0,938 g/cm³ et **en ce qu'**une composante de promotion d'adhérence est ajoutée à la matière plastique de la couche promotrice d'adhérence.

3. Tuyau composite plastique/métal selon la revendication 1 ou 2, **caractérisé en ce que** des substances phénoliques, des thio-antioxydants et des stabilisants à la lumière à amine encombrée (matériaux « HALS ») ou des combinaisons de ceux-ci sont utilisés comme stabilisants pour la matière plastique du tuyau intérieur.

4. Tuyau composite plastique/métal selon la revendication 3, **caractérisé en ce que** les stabilisants pour la matière plastique du tuyau intérieur et de la couche promotrice d'adhérence présentent une structure moléculaire asymétrique et se figent dans la phase de polymère amorphe de la matière plastique de la couche promotrice d'adhérence.

5. Tuyau composite plastique/métal selon l'une des revendications 1 à 4, **caractérisé en ce que** la matière plastique du tuyau intérieur et celle de la couche promotrice d'adhérence présentent sensiblement les mêmes structures moléculaires.

6. Tuyau composite plastique/métal selon l'une des revendications 1 à 5, **caractérisé en ce que** la densité de la matière plastique de la couche promotrice d'adhérence diffère de +/- 1 %, de préférence de 0,8 % et en particulier de 0,6 % de la densité moyenne de la matière plastique du tuyau intérieur.

7. Tuyau composite plastique/métal selon l'une des revendications 1 à 6, **caractérisé en ce que** la matière plastique de la couche promotrice d'adhérence présente un indice de fusion qui diffère de +/- 50 %, de préférence de +/- 40 % et en particulier de +/- 35 % de l'indice de fusion de la matière plastique du tuyau intérieur.

8. Tuyau composite plastique/métal selon l'une des revendications 1 à 7, **caractérisé en ce que** la matière plastique de la couche promotrice d'adhérence présente 0,01 à 1,0 % en poids de désactivateurs de métaux.

9. Tuyau composite plastique/métal selon la revendications 8, **caractérisé en ce qu'**un désactivateur de métaux à base de phénol (nom commercial : Irganox MD 1024) est utilisé dans la proportion de 0,02 à 0,3 %.

10. Tuyau composite plastique/métal selon l'une des revendications 1 à 9, **caractérisé en ce que** la matière plastique du tuyau intérieur présente un polymère de base qui est un polyéthylène non réticulé d'une densité de 0,942 à 0,947 g/cm³.

11. Tuyau composite plastique/métal selon l'une des revendications 1 à 10, **caractérisé en ce que** la couche promotrice d'adhérence est présente sous forme réticulée, le degré de réticulation étant compris entre 30 % et 70 %.

12. Tuyau composite plastique/métal selon l'une des revendications 1 à 11, **caractérisé en ce que** la couche promotrice d'adhérence est colorée pour permettre la détermination, par une technique de mesure à l'aide d'un microscope, de la densité de couche.

13. Tuyau composite plastique/métal selon l'une des revendications 1 à 11, **caractérisé en ce que** la couche promotrice d'adhérence est pourvue de matières de remplissage pour permettre la détermination, par une technique de mesure au moyen de rayons X, de la densité de couche.

14. Tuyau composite plastique/métal selon l'une des revendications 1 à 13, **caractérisé en ce que** la couche promotrice d'adhérence présente un matériau traceur détectable par lumière UV ou rayons X pour permettre le codage de sa composition de matière ou de sa matière.
